# EUROPEAN PATENT APPLICATION

(11) **EP 1 031 824 A2**
(43) Date of publication of application: **30.08.2000**
(21) Application number: 00103713.4
(22) Date of filing: 22.02.2000
(51) Int. Cl.: G01G 15/00

(54) **Weighing objects**

(30) Priority: 22.02.1999 IT MO990031
(71) Applicant: ESA/G.V.- S.R.L., 41011 Campogalliano (Modena) (IT)
(72) Inventor: Lugli, Mauro, 41100 Modena (IT); Guerzoni, Walter, 41100 Modena (IT)
(74) Representative: Luppi, Luigi

(57) **Abstract**

The method for weighing objects, includes causing the movement of an object (6; 6, 10), submitting said object (6; 6, 10) to a weighing process carried out through suitable weighing means (18) provided with means (34, 36) sensitive to the weight of said object (6; 6, 10); the weighing includes causing said object (6; 6, 10) to interact with said weight sensitive means (34, 36) while said movement is progress; the apparatus includes moving means (1) for moving objects (6; 6, 10) and weighing means (18) for measuring the weight of said objects (6; 6, 10), said weighing means (18) being provided with means (34, 36) sensitive to the weight of said objects (6; 6, 10); the weight sensitive means (34, 36) are arranged along said moving means (1) so as to interact with said objects (6; 6, 10) while said objects pass on said moving means (1).

## Description

The invention relates to a method and an apparatus for weighing objects passing on a conveyor line and more in particular relates to the weighing of ceramic tiles.

Ceramic supports, raw or already cooked in oven, that must be decorated by glazing are transferred on belts of conveyor lines passing through respective glazing units, wherein a decorating glaze layer is applied onto the visible surface of the bare supports.

The weight difference between a bare support, i.e. an unglazed support, that has been withdrawn upstream of a certain glazing unit and the same support just glazed, i.e. withdrawn downstream of the same glazing box, is detected; this weight difference constitutes the amount of glaze weight that has been actually deposited on the support in that unit.

Besides, in conventional plants, a weighing cycle includes manually removing the bare support from the conveyor line; manually repositioning the same support onto the line and removing, still manually, the support from the line after glazing.

The above described weighing cycle is quite disadvantageous, because it requires a continuous intervention of an operator who performs the various steps manually and tries not to interfere with the operation of the line, it does not allow an immediate correction of the operating parameters of the glazing box, for instance the flow of glaze, to be effected and it is difficult to be programmed at preestablished and constant intervals of time - as it would be desirable - because it is influenced by the personal working load of each operator, frequently subject to contingencies.

Weighing systems are also known in which the products to be weighed are transferred on weighing belt conveyors, i.e. belt conveyors connected to sensitive means for continuously detecting the weight.

It is a purpose of the invention to improve the efficiency of the known systems for weighing objects, particularly ceramic supports.

In an aspect of the invention, a method is provided including:
- causing an object to be moved;
- submitting said object to a weighing process causing it to pass on weight sensitive means provided in suitable weighing means, characterized in that, before said weighing, there is provided imparting a sufficient kinetic energy to said object to cause it to pass substantially by inertia on said weight sensitive means.

In an further aspect of the invention, an apparatus is provided including a moving line for moving objects and weighing means provided with weight sensitive means arranged along said line for detecting the weight of said object, characterized in that, said moving line is capable of imparting to said objects a kinetic energy sufficient to cause them to pass substantially by inertia through said weight sensitive means.

Consequently, the detection of the weight of an object is performed while the object is substantially not subject to external forces that could affect the measure of the weight. This allows to obtain an high accuracy of measure.

Due to the invention, it is possible to carry out a weight control of a part only, or all the ceramic supports that pass through a particular glazing unit and to obtain statistic information that can be used for making appropriate corrections of the operational parameters of the glazing box. Such corrections can concern indicatively the glaze flow, or its composition, or the feeding pressure.

Furthermore the presence of an operator that carries out the weighing in manual way is not required.

The invention could be better understood and carried out with reference to the enclosed drawing tables, that illustrate an exemplifying and not limiting embodiment thereof, wherein:
Figure 1 is a sketched view of a plant for glazing ceramic tiles provided with a weighing apparatus arranged upstream with respect to a glazing unit and a weighing apparatus arranged downstream with respect to the same box, both the apparatuses being interconnected to a same processing and control unit;
Figure 2 is a sketched plan view of one of the weighing apparatuses of Figure 1;
Figure 3 is the section III-III of Figure 2;
Figure 4 is the section IV-IV of Figure 2;
Figure 5 is a sketched plan view of a second version of weighing apparatus;
Figure 6 is a sketched section along the plane VI-VI of Figure 5;
Figure 7 is a sketched plan view of motorized means for actuating weighing rollers;
Figure 8 is a side view of the motorized means in engagement with the weighing rollers.

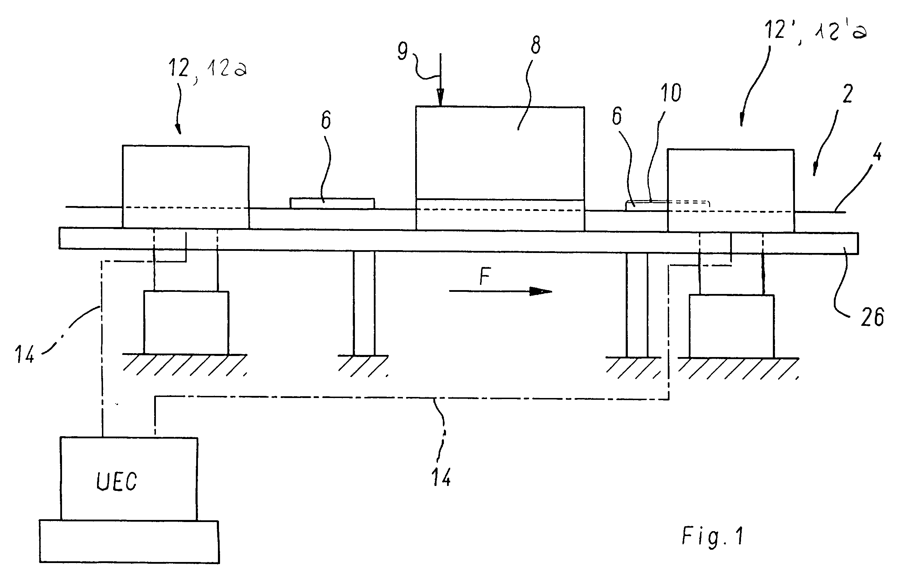

As shown in the Figure 1, a conveyor line 2, including a pair of longitudinal parallel belts 4, whereon the ceramic supports 6 to be glazed rest, extends through a glazing unit 8, of a known type, so that the bare supports 6 are introduced one at a time, in the direction shown by the arrow F, into the box 8 through one of its sides and comes out through-the opposite side after a surface layer 10 of ceramic glaze, fed to the unit 8 via a feeding duct 9, has been applied thereon.

Both upstream and downstream with respect to the box 8, a weighing unit 12, 12' is provided for detecting the weight of the bare supports 6 and, respectively, of the supports 6 coated by the glaze layer 10.

Each unit 12, 12' is provided with a tunnel protecting the supports 6 during the weighing and is connected via data transmitting means 14 to a single processing and control unit, UEC, the measure of the weight being obtained in a differential way.

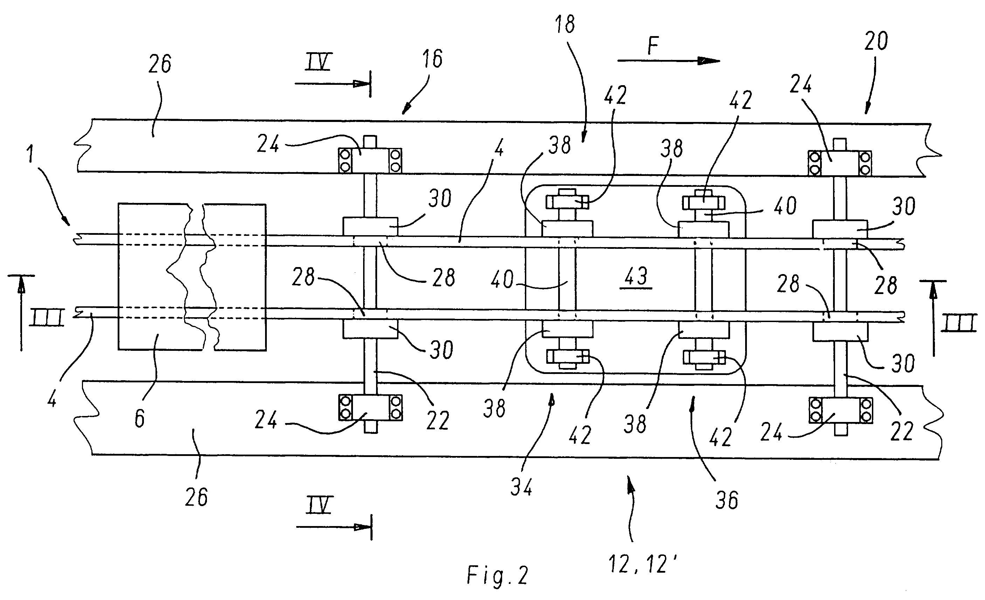

In Figures 2 to 4 the structure of a weighing unit 12 for weighing bare supports 6 is shown; the structure of the other weighing unit 12', i.e. the unit for weighing the supports 6 coated by the layer 10, is quite analogous and therefore is not specifically illustrated.

As shown in Figure 2, a support 6 to be weighed, resting on the conveyor line 2 moving in the direction F, arrives to the weighing unit 12 in the region of accelerating and height modifying means 16 that lifts each support 6 by disengaging it from the belts 4 in order to bring it to a more elevated height in comparison with the transport plane defined by the belts 4. While remaining above the belts 4 without touching them, the support 6 interacts then with weighing means 18, that detects its weight, and proceeds subsequently toward further accelerating and height modifying means 20, analogous to the accelerating and height modifying means 16, that lowers it and brings it again to rest on the belts 4.

Each of the accelerating and height modifying means 16 and each of the further accelerating and height modifying means 20 includes a shaft 22, rotatingly supported by end supports 24, fixed to longitudinal stringers 26, being part of the conveyor line 2.

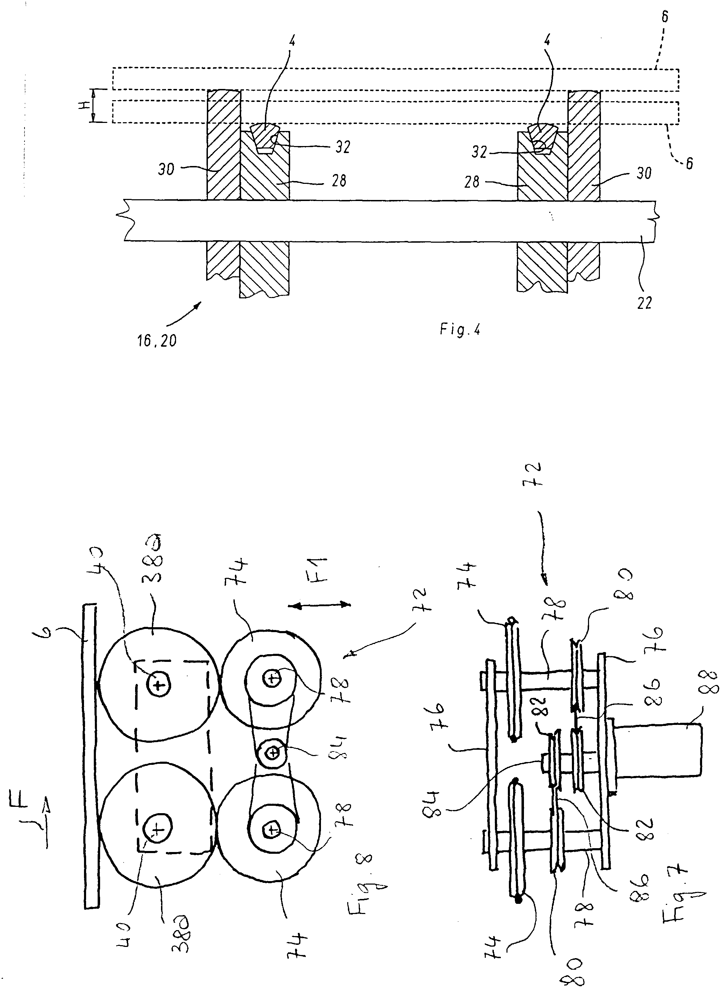

A pair of pulleys 28 is integral with each shaft 22. As illustrated in Figure 4, each of the belts 4 engages a groove 32 of the corresponding pulley 28 and therefore obliges the shafts 22 to rotate around their respective longitudinal axis on the supports 24.

At least a pair of wheels 30 is also connected to each shaft 22, having an outer diameter grater than the outer diameter of the pulleys 28. The half-difference between the outer diameters of the wheels 30 and the outer diameters of the pulleys 28 defines substantially the height variation H imposed first to the supports 6 by the accelerating and height modifying means 16 and subsequently by the further accelerating and height modifying means 20.

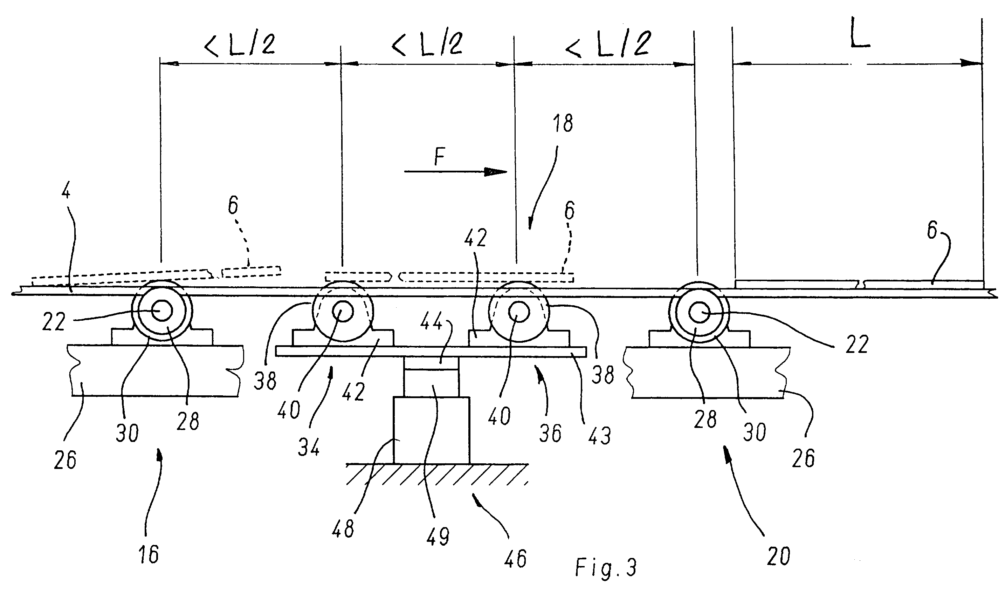

As illustrated in Figure 3, when a support 6, having a length L, enters in contact with the accelerating and height modifying means 16, it is lifted at its front portion and, continuing its motion along the direction F, balances on the wheels 30 until a region of its front edge, i.e. facing towards the advancement direction, rests on sensitive means 34 of the weighing means 18. Due to the difference of external diameter between the wheels 30 and the pulleys 28, the wheels 30 have a peripheral speed greater than the belts 4 so that the support 6, once delivered to the wheels 30, is subjected to an acceleration in the direction of the arrow F caused by the greater peripheral speed imparted by the wheels 30.

The kinetic energy the support 6 has when the back edge of the support 6, with respect to the advancement direction marked by the arrow F, has left the accelerating and height modifying means 16, must be of such value as to allow the support 6 to reach the further accelerating and height modifying means 20 after having passed on the weighing means 18. In fact, the support 6, not being in contact with the belts 4 any more, proceeds through the weighing means 18 inertially.

The weighing means 18 includes further sensitive means 36 arranged at a convenient distance from the sensitive means 34, so that the support 6, when continuing its run along the direction F, can rest on the sensitive means 34 and on the further sensitive means 36, separated from the belts 4 of the conveyor line 2 and from the accelerating and height modifying means 16, 20.

Each of the sensitive means 34 and of the further sensitive means 36 includes at least a pair of revolving means 38, each at least a pair of revolving means 38 being firmly joined to respective shaft means 40.

The revolving means 38 can be constituted by wheels having a diameter substantially corresponding to the diameter of the wheels 30. It is preferred that the diameter of the revolving means 38 is slightly smaller than the diameter of the wheels 30 so as to avoid that collisions between the support 6 and the revolving means 38 can occur, when the support 6 contacts the sensitive means 34.

Both the shaft means 40 are supported free to rotate by end bearings 42 fixed to a connecting plate 43 that transmits the weight of the elements connected to it and the weight of the support 6 to be weighed to load cell means 44 kept at a distance from the ground by support means 46 including a first cylindrical element 48 and a second cylindrical element 49, the height of which is telescopically adjustable.

When the support 6 rests on both the sensitive means 34 and the further sensitive means 36 the UEC detects the weight of the support 6. Starting from value of the weight of a bare support 6 and of the same support coated by the glaze layer 10 the UEC elaborates the value of the weight of the amount of glaze 10 that has been deposited on the specific support 6. After being weighed, the support 6 advances toward the further height modifying means 20 and, balancing forward in the direction of the arrow F on the pair of wheels 30, rests on the underlying belts 4 with a region of its front edge. What has been explained above makes clear that the distance between the axes of the shaft means 40 and the distance between the axes of each shaft means 40 and the shaft 22, that is placed before, or follows, the sensitive means 34, 36, is smaller than half the length L of each support 6.

The structure of the above described apparatus makes possible to weigh ceramic supports without being obliged to stop the conveyor line 1, or to remove the supports 6 from the line in order to weigh them.

Furthermore the apparatus can be easily inserted in any position along a conventional conveyor line 1, without changes or alterations of the same line being necessary.

The UEC processes the data related to the weights of a meaningful sample of supports 6, bare and coated by the layer 10, according to statistic procedures.

Other functions of the UEC are:
- evaluating the congruence of the single weighings which are to be included in the sample;
- calculating possible corrective values;
- evaluating possible anomalies of the weighing means in order to signal errors or to notice the impossibility to operate;
- providing, by request, a control signal for the glazing units in order to cause them to operate regularly;
- controlling the possible variations of the linear speed of the supports by introducing a parameter related to the longitudinal dimension of the support 6, in order to optimize the measure of the detected differential weight.

Furthermore, when a plurality of lines 1 with respective UECs are provided, the UECs can be connected with each other and/or with a central computer that provides for the control of the set of lines.

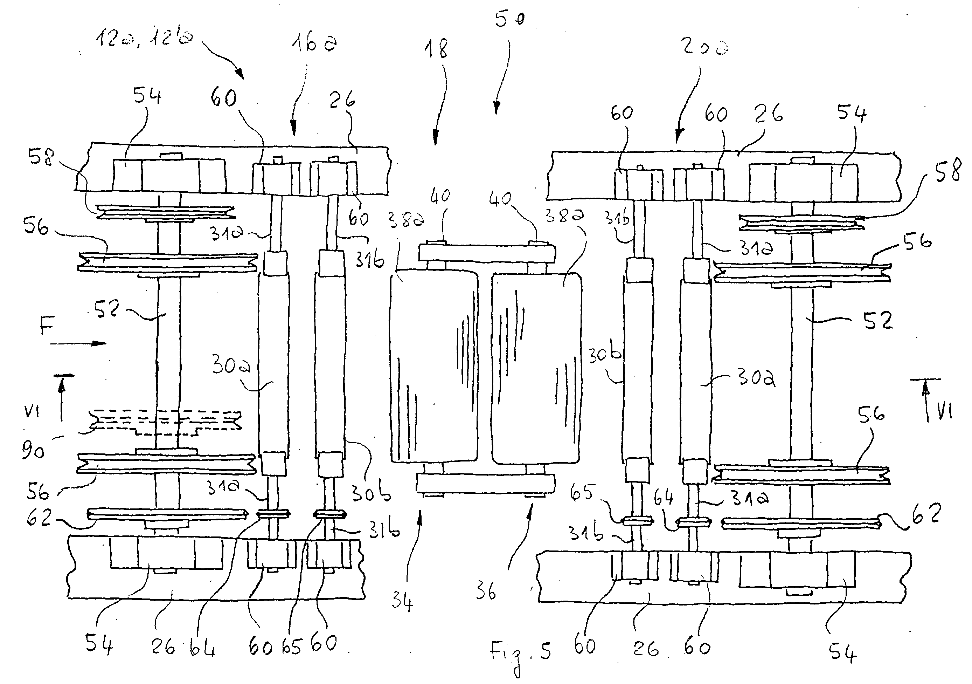

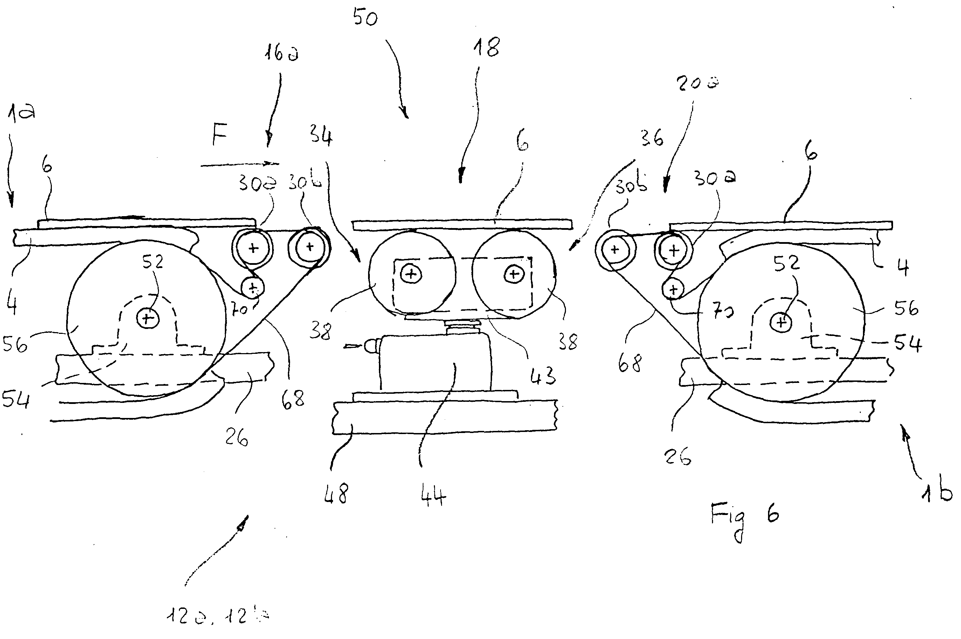

In the version of the Figures 5 and 6, a weighing unit 12a, 12'a is inserted in a broken region 50 of the conveyor line 1 of the supports 6. Therefore, the conveyor line 1 is divided into two portions 1a, 1b, upstream and downstream the weighing means 18 respectively, in the region of a pair of return shafts 52 rotatably supported at their ends by bearings 54 associated to the longitudinal stringers 26. A pair of pulleys 56 on which the belts 4 of the conveyor line 1 are wound, is keyed on each return shaft 52.

The convoying line 1 being divided into two parts, it would be now necessary to motorize each portion 1a, 1b independently. In order to remedy this disadvantage, it is possible to key a pair of driving pulleys 58 on the pair of return shafts 52, on a longitudinal plane parallel to the direction F, so as to connect the two portions 1a, 1b with each other and to transmit the advancement motion of the supports 6 from a portion to the other by means of a driving belt - not shown - engaging the pulleys 58.

In the broken region 50, accelerating means 16a, 20a are arranged, upstream and downstream the weighing means 18 respectively, having the same function as the accelerating means 16, 20, but operating on the same conveyor plane of the supports 6 on the belts 4.

Each accelerating means 16a, 20a includes a pair of rollers 30a, 30b, one roller being arranged at a greater distance from the weighing means 18 than the other roller, each roller having respective shanks 31a, 31b rotatingly supported to the stringers 26 by a pair of end bearings 60 .

The rollers 30a, 30b are motorized by the conveyor line 1 by means of a driving pulley 62, keyed on each return shaft 52 at the side opposed to the side occupied by the transmission pulleys 58, by a first driven pulley 64 and a second driven pulley 65 keyed on the shanks 31a, 31b, respectively.

A belt 68 engages each driving pulley 62, the driven pulleys 64, 65 and a tightener 70, in order to transmit a rotating motion in a same direction to the rollers 30a, 30b.

Since the first driven pulleys 64 have a diameter greater than the diameter of the second driven pulleys 65, the supports 6 are accelerated by the rollers 30a respectively before being delivered by inertia to the weighing means 18 and before being delivered to the section 1b, downstream the weighing means 18. In addition, the fact that the conveyor line 1 has been divided into two parts makes possible to use rollers 38a, instead of the wheels 38, in the weighing means 18 which leads to obtain a greater rigidity of the structure and to limit limit the vibrations transmitted to the supports 6. The same remarks can be made for the rollers 30a, 30b with respect to the wheels 30.

As shown in Figures 7 and 8, when necessary, the rollers 38a of the weighing means 18 are driven to rotate around the shafts 40 through motorized means 72, associated with engaging means, not shown, capable of bringing the rollers 38a, 38b in contact with the motorized means 72 and disconnecting them therefrom.

For instance, engaging means includes lifting means operating along the direction F1.

The motorized means 72 includes friction wheels 74 rotatably supported to side walls 76 through driven shafts 78. On the driven shafts 78 driven pulleys 80 are keyed, said driven pulleys being coupled, by means of belts 86, to driving pulleys 82, keyed on a single intermediate shaft 84.

On the intermediate shaft 84 there is mounted an engine 88, capable of driving the friction wheels 74 and consequently the rollers 38a when the friction wheels 74 are brought in contact with the rollers themselves.

Alternatively, the driving shaft 84 can be driven by the conveyor line, through known transmission means, for example belt means, that are driven by an additional pulley 90 keyed on one of the return shafts 52. Of course, the above described system can be employed not only for weighing ceramic supports, but also for weighing any kind of objects, particularly for differential weighing a same object liable to weight variations, depending on its use, or on the processings it has undergone, or on other possible causes.

## Claims

1. Method for weighing objects, including:
- moving an object (6; 6, 10);
- weighing said object (6; 6, 10) by causing it to pass on weight sensitive means (34, 36) provided in suitable weighing means (18), characterized in that, before said weighing, there is provided imparting a sufficient energy to said object (6; 6, 10) to cause it to pass substantially by inertia through said weight sensitive means (34, 36).

2. Method according to-claim 1, wherein data related to the weight of each object (6; 6, 10) are transmitted to a processing and control unit (UEC).

3. Method according to any of the preceding claims, wherein said processing and control unit (UEC) processes said data by calculating the difference between the weight of the support (6, 10) after a variation of weight has occurred and the weight of the support (6) before said variation of weight has occurred.

4. Apparatus, comprising moving means (1; 1a, 1b) for moving objects (6; 6, 10) and weighing means (18) provided with weight sensitive means (34, 36) arranged along said line (1) for detecting the weight of said objects (6; 6, 10), characterized in that, said moving means (1; 1a, 1b) are capable of imparting a sufficient kinetic energy to said objects (6; 6, 10) to cause them to pass substantially by inertia on said weight sensitive means (34, 36).

5. Apparatus according to claim 4, wherein a weighing unit (12; 12a) is provided along said moving means (1; 1a, 1b) comprising at least said weighing means (18) and arranged upstream an operative unit (8).

6. Apparatus according to claim 4, or 5, wherein a weighing unit (12; 12a) is provided along said moving means (1; 1a, 1b) comprising at least said weighing means (18) and arranged downstream of an operative unit (8).

7. Apparatus according to any of claims 4 to 6, wherein, upstream and/or downstream said weighing means (18), accelerating means (16; 20; 16a; 20a) of said objects (6; 6, 10) are provided along said moving means (1; 1a, 1b).

8. Apparatus according to any of claims 4 to 7, wherein, upstream and/or downstream of said weighing means (18), height modifying means (16; 20) of said objects (6; 6, 10) are provided arranged for lifting and/or respectively lowering said objects (6; 6, 10) from said moving means (1).

9. Apparatus according to claim 7, or 8, wherein said height modifying means (16; 20) and/or said accelerating means (16; 20; 16a; 20a) includes dragging means (28; 62, 64, 64, 68) associated with coupling means (22; 52) operated by said moving means (1; 1a, 1b).

10. Apparatus according to any of claims 7 to 9, wherein said height modifying means (16; 20) and/or said accelerating means (16; 20; 16a; 20a) include rolling bodies (30; 30a, 30b).

11. Apparatus according to any of claims 4 to 10, wherein said weight sensitive elements (34, 40) include rolling means (38) substantially free to rotate around a respective longitudinal axis.

12. Apparatus according to any of claims 4 to 10, wherein said moving means (1, 1a, 1b) are interrupted in a region (50) in the area of said weight sensitive means (34, 36).

13. Apparatus according to claim 11 or 12, wherein said rolling means (38) are intermittently coupled to respective motorized means (72).
